# EUROPEAN PATENT APPLICATION

(11) **EP 4 546 136 A1**
(43) Date of publication of application: **30.04.2025**
(21) Application number: 24205692.7
(22) Date of filing: 09.10.2024
(51) Int. Cl.: G06F 9/50, G06N 5/025

(54) **AUTOMATED DISTRIBUTION OF PROCESSING NODES OF A RULES-BASED APPLICATION ACROSS A CLUSTER OF COMPUTING DEVICES**

(30) Priority: 24.10.2023 US 202318493210
(71) Applicant: Red Hat, Inc., Raleigh, NC 27601 (US)
(72) Inventor: VACCHI, Edoardo, Raleigh 27601 (US); ANTINORI, Paolo, Raleigh 27601 (US)
(74) Representative: Murgitroyd & Company

(57) **Abstract**

A rules engine accesses a rules-based application that identifies a plurality of rules, each rule identifying a condition and an action that may be taken based on an evaluation of the condition. The rules engine generates, from the rules-based application, a plurality of processing nodes, some of the processing nodes corresponding to conditions identified in a rule and others of the processing nodes corresponding to actions to be taken. Processing node information is input into a constraint solver that identifies the processing nodes and interrelationships between the processing nodes and a cost function that identifies a processing preference. A solution is received from the constraint solver that identifies a first set of processing nodes of the plurality of processing nodes to be implemented on a first computing device, and a second set of processing nodes of the plurality of processing nodes to be implemented on a second computing device.

## Description

### TECHNICAL FIELD

Aspects of the present disclosure relate to a method, a computing system and a non-transitory computer-readable storage medium to distribute processing nodes of a rules-based application across multiple computing devices.

### BACKGROUND

A rules engine is a software system that executes a rules-based application made up of a plurality of rules. The rules typically include one or more conditions and an action that is taken based on the outcome of the conditions. Complex rules-based application can include hundreds or even thousands of rules.

Many rules engines operate in accordance with the Rete algorithm designed by Dr. Charles Forgy. The Rete algorithm is a pattern matching algorithm for implementing rule-based systems. The algorithm was developed to efficiently apply many rules or patterns to many objects, or facts, in a knowledge base.

A Rete-based rules engine receives as input one or more specifications written in a predetermined syntax that identifies the rules and the relationship between the rules, such as an order of operation of the rules. The rules engine typically processes the specification to generate processing nodes that collectively implement the rules, and a Rete graph, typically an acyclic directed graph wherein nodes of the graph correspond to conditions or actions and edges between nodes identify execution flow. The processing nodes are conditional statements that operate on "facts". The facts are introduced into the application via a "fact object" that contains factual information relating to a transaction that is submitted to the application. If the facts in the fact object pass a condition the fact object is passed down to the next processing node. If a fact object reaches the end of the path than the fact object passed each condition and an action is taken. The fact objects and outcomes of any actions may be stored in a working memory that is accessed by the processing nodes.

Rules engines generally process input facts more quickly than other programming techniques that rely on sequential processing of nested IF-THEN-ELSE statements. A Rete graph grows with the number of rules of the rules-based application, and thus a large set of rules results in a large Rete graph and a corresponding large number of processing nodes. Typically a rules engine executes a rules-based application on a single computing device (e.g., a bare metal machine or a virtual machine).

### SUMMARY

The examples disclosed herein implement automated partitioning of processing nodes of a rules-based application for execution by a rules engine.

According to an aspect of the present disclosure, a method is provided of accessing, by a rules engine executing on a computing system comprising a computing device, a rules-based application that identifies a plurality of rules, each of the rules identifying a condition and an action that may be taken based on an evaluation of the condition; generating, by the rules engine from the rules-based application, a plurality of processing nodes, some of the processing nodes corresponding to conditions identified in a rule and others of the processing nodes corresponding to actions to be taken; inputting, into a constraint solver, processing node information that identifies the processing nodes and interrelationships between the processing nodes and a cost function that identifies a processing preference; receiving, from the constraint solver, a solution that identifies a first set of processing nodes of the plurality of processing nodes to be implemented on a first computing device, and a second set of processing nodes of the plurality of processing nodes to be implemented on a second computing device.

Receiving the solution from the constraint solver may comprise receiving, from the constraint solver, a plurality of solutions, each solution identifying a corresponding first set of processing nodes of the plurality of processing nodes to be implemented on the first computing device, and a corresponding second set of processing nodes of the plurality of processing nodes to be implemented on the second compute computing device, each solution being different.

The method may include presenting, by the computing system on a display device, user interface imagery that identifies the plurality of solutions; receiving, by the computing system, a selection of a first solution of the plurality of solutions; and causing the corresponding first set of processing nodes to be implemented on the first computing device and the second set of process nodes to be implemented on the second computing device.

The processing nodes may be implemented as serverless functions.

The processing node information may identify paths of execution through the plurality of processing nodes for a plurality of previous transactions, and the cost function may indicate a preference to maintain processing nodes that are visited in sequence on a same computing device.

The processing node information may identify, for each of the processing nodes, a source of information for each of the processing nodes, and the cost function may indicate a preference to maintain processing nodes that have a same source of external information on a same computing device.

The rules engine may be Rete-based.

The plurality of processing nodes may include a first subset of alpha processing nodes and a second subset of beta processing nodes, each alpha processing node comprising a processing node that matches attributes of an inserted fact object against constant values, or matches attributes of the inserted fact object against other attributes of the inserted fact object, each beta processing node comprising a processing node that matches attributes of the inserted fact object against other previously inserted fact objects.

The information that identifies the processing nodes and the interrelationships between the processing nodes may identify the first subset of processing nodes as alpha processing nodes and the second subset of processing nodes as beta processing nodes, and the cost function may indicate that the beta processing nodes are to be implemented on a single computing device and the alpha processing nodes may be distributed across multiple computing devices.

According to a second aspect of the present disclosure a computing system is provided that includes one or more computing devices configured to: access a rules-based application that identifies a plurality of rules, each of the rules identifying a condition and an action that may be taken based on an evaluation of the condition; generate, from the rules-based application, a plurality of processing nodes, some of the processing nodes corresponding to conditions identified in a rule and others of the processing nodes corresponding to actions to be taken; input, into a constraint solver, processing node information that identifies the processing nodes and interrelationships between the processing nodes and a cost function that identifies a processing preference; receive, from the constraint solver, a solution that identifies a first set of processing nodes of the plurality of processing nodes to be implemented on a first computing device, and a second set of processing nodes of the plurality of processing nodes to be implemented on a second computing device.

The computing system may be further configured to receive the solution from the constraint solver by receiving, from the constraint solver, a plurality of solutions, each solution identifying a corresponding first set of processing nodes of the plurality of processing nodes to be implemented on the first computing device, and a corresponding second set of processing nodes of the plurality of processing nodes to be implemented on the second compute computing device, each solution being different.

The one or more computing devices may be further configured to: present, on a display device, user interface imagery that identifies the plurality of solutions; receive a selection of a first solution of the plurality of solutions; and cause the corresponding first set of processing nodes to be implemented on the first computing device and the second set of process nodes to be implemented on the second computing device.

The processing nodes may be implemented as serverless functions.

The processing node information may identify paths of execution through the plurality of processing nodes for a plurality of previous transactions, and the cost function may indicate a preference to maintain processing nodes that are visited in sequence on a same computing device.

The processing node information may identify, for each of the processing nodes, a source of information for each of the processing nodes, and the cost function may indicate a preference to maintain processing nodes that have a same source of external information on a same computing device.

The rules engine may be Rete-based.

The plurality of processing nodes may include a first subset of alpha processing nodes and a second subset of beta processing nodes, each alpha processing node comprising a processing node that matches attributes of an inserted fact object against constant values, or matches attributes of the inserted fact object against other attributes of the inserted fact object, each beta processing node comprising a processing node that matches attributes of the inserted fact object against other previously inserted fact objects.

The information that identifies the processing nodes and the interrelationships between the processing nodes may identify the first subset of processing nodes as alpha processing nodes and the second subset of processing nodes as beta processing nodes, and the cost function may indicate that the beta processing nodes are to be implemented on a single computing device and the alpha processing nodes may be distributed across multiple computing devices.

According to a third aspect of the present disclosure a non-transitory computer-readable storage medium is provided that includes executable instructions to cause a processor device to access a rules-based application that identifies a plurality of rules, each of the rules identifying a condition and an action that may be taken based on an evaluation of the condition; generate, from the rules-based application, a plurality of processing nodes, some of the processing nodes corresponding to conditions identified in a rule and others of the processing nodes corresponding to actions to be taken; input, into a constraint solver, processing node information that identifies the processing nodes and interrelationships between the processing nodes and a cost function that identifies a processing preference; receive, from the constraint solver, a solution that identifies a first set of processing nodes of the plurality of processing nodes to be implemented on a first computing device, and a second set of processing nodes of the plurality of processing nodes to be implemented on a second computing device.

The non-transitory computer-readable storage medium may include instructions to receive the solution from the constraint solver by receiving, from the constraint solver, a plurality of solutions, each solution identifying a corresponding first set of processing nodes of the plurality of processing nodes to be implemented on the first computing device, and a corresponding second set of processing nodes of the plurality of processing nodes to be implemented on the second compute computing device, each solution being different.

The non-transitory computer-readable storage medium may include instructions to: present, on a display device, user interface imagery that identifies the plurality of solutions; receive a selection of a first solution of the plurality of solutions; and cause the corresponding first set of processing nodes to be implemented on the first computing device and the second set of process nodes to be implemented on the second computing device.

The processing node information may identify paths of execution through the plurality of processing nodes for a plurality of previous transactions, and the cost function may indicate a preference to maintain processing nodes that are visited in sequence on a same computing device.

The processing nodes may be implemented as serverless functions.

The processing node information may identify, for each of the processing nodes, a source of information for each of the processing nodes, and the cost function may indicate a preference to maintain processing nodes that have a same source of external information on a same computing device.

The processing node information may identify, for each of the processing nodes, a source of information for each of the processing nodes, and the cost function may indicate a preference to maintain processing nodes that have a same source of external information on a same computing device.

The rules engine may be Rete-based.

The plurality of processing nodes may include a first subset of alpha processing nodes and a second subset of beta processing nodes, each alpha processing node comprising a processing node that matches attributes of an inserted fact object against constant values, or matches attributes of the inserted fact object against other attributes of the inserted fact object, each beta processing node comprising a processing node that matches attributes of the inserted fact object against other previously inserted fact objects.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of an environment in which automated distribution of processing nodes of a rules-based application across a cluster of computing devices can be practiced according to some implementations;
Figure 2 is a diagram illustrating a user interface presenting a plurality of solutions for automated distribution of processing nodes of a rules-based application across a cluster of computing devices according to one implementation;
Figure 3 is a diagram illustrating the implementation of processing nodes on a cluster of computing devices based on a solution received from a constraint solver according to one implementation;
Figure 4 is a flowchart of a method for automated distribution of processing nodes of a rules-based application across a cluster of computing devices according to some implementations;
Figure 5 is a simplified block diagram of the environment illustrated in Figure 1 according to one implementation; and
Figure 6 is a block diagram of a computing device suitable for automated distribution of processing nodes of a rules-based application across a cluster of computing devices can be practiced according to some implementations.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

In accordance with the present disclosure, it may be desirable to distribute the processing nodes across multiple computing devices, and, for resource-constrained computing devices, such as Internet-of-Things (IoT) devices, it may not be possible to load a large rules-based application in the limited memory of such devices.

The examples disclosed herein implement automated partitioning of processing nodes of a rules-based application for execution by a rules engine. In particular, the examples disclosed herein identify a first set of processing nodes of a rules-based application that can be implemented on a first computing device and a second set of processing nodes of the rules-based application that can be implemented on a second computing device based on an analysis of the processing nodes by a constraint solver and a cost function. In particular, the examples input, into the constraint solver, information that identifies the processing nodes, interrelationships between the processing nodes, and a cost function that identifies a processing preference. A solution is received from the constraint solver that identifies a first set of processing nodes of the plurality of processing nodes to be implemented on a first computing device, and a second set of processing nodes of the plurality of processing nodes to be implemented on a second computing device.

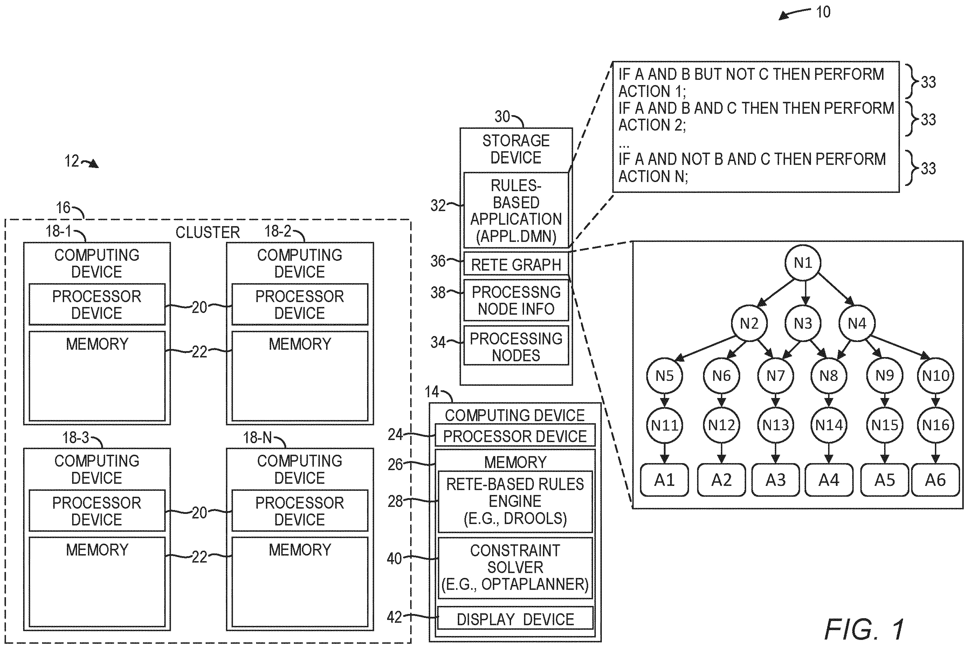

Figure 1 is a block diagram of an environment 10 in which automated distribution of processing nodes of a rules-based application across a cluster of computing devices can be practiced according to some implementations. The environment 10 includes a computing system 12 that includes one or more computing devices 14 and a cluster 16 of computing devices 18-1 - 18-N generally, computing devices 18). The cluster 16 may be any type of computing cluster such as, by way of non-limiting example, a Kubernetes cluster or an Amazon Lambda cluster. Each of the computing devices 18 includes a processor device 20 and a memory 22.

The computing device 14 includes a processor device 24 and a memory 26. A Rete-based rules engine 28 (hereinafter "rules engine 28" for the sake of brevity) executes in the memory 26. The term "Rete-based rules engine" refers to any rules engine that processes one or more specification files that compose (e.g., define) a rules-based application and identify a plurality of conditions and actions taken in response to the conditions, and that organizes the conditions into a Rete network (sometimes referred to as a Rete graph) for executing the rules-based application. The examples disclosed herein have applicability to any such Rete-based rules engine, however, in one implementation, the rules engine 28 comprises Drools, available at drools.org, modified as described herein.

The computing device 14 includes or is communicatively coupled to a storage device 30 on which a rules-based application 32 is stored. The rules-based application 32 comprises a plurality of rules 33, each of which includes one or more conditions and an action that may be taken based on an evaluation of the one or more conditions, and is written in a specific syntax such as, by way of non-limiting example, decision model and notation (DMN) syntax. The rules engine 28 accesses the rules-based application 32 and generates a plurality of processing nodes 34. Some of the processing nodes 34 correspond to conditions identified in a rule 33 and others of the processing nodes 34 correspond to actions to be taken. The rules engine 28 also generates, based on the rules-based application 32, a Rete graph 36 that identifies the processing nodes 34 and interrelationships between the processing nodes 34. The interrelationships includes the particular conditional paths through the processing nodes 34. The processing nodes 34 stored on the storage device 30 may comprise compiled or bytecode instruction sets that can be executed (e.g., implemented) on a computing device 18.

In this example, the Rete graph 36 identifies graph nodes N1 - N16 and A1 - A6. The graph nodes N1 - N16 correspond to processing nodes 34 that evaluate conditions and the graph nodes A1 - A6 correspond to different actions that will be taken if the conditional evaluations lead to that particular graph node A1 - A6. For example, if a particular "fact object" (e.g., a transaction) that is inserted at the graph node N1 contains information that causes the conditional evaluations along the path of graph nodes N1, N2, N5 and N11 to each be true, then the processing node 34 that corresponds to the graph node A1 will implement a particular action. If the particular fact object contains information that causes the conditional evaluations along the path of graph nodes N1, N2, N6 and N12 to each be true, then the processing node 34 that corresponds to the graph node A2 will implement a particular action.

The rules engine 28 generates, based on the processing nodes 34 and the processing node information 38 that identifies the processing nodes 34 and interrelationships between the processing nodes 34, information in a format suitable for a constraint solver 40. Any suitable constraint solver may be used. In some implementations, the constraint solver 40 comprises OptaPlanner, available at www.optaplanner.org. The rules engine 28 inputs, into the constraint solver 40, the processing node information 38 and a cost function that identifies a processing preference.

The constraint solver 40, based on the processing node information 38 and the cost function, outputs a solution that identifies a first set of processing nodes 34 to be implemented on a first computing device 18, and a second set of processing nodes of the plurality of processing nodes to be implemented on a second computing device 18. In some implementations, the constraint solver 40 may provide several solutions, each solution identifying a corresponding first set of processing nodes 34 to be implemented on the first computing device 18, and a corresponding second set of processing nodes 34 of the plurality of processing nodes to be implemented on the second compute computing device 18, each solution being different.

The rule engine 28 may present, on a display device 42, user interface imagery that identifies the plurality of solutions. A user, such as an operator, may review the multiple solutions and select a particular solution. The rule engine 28 receives the selection of the solution, and causes the corresponding first set of processing nodes 34 to be implemented on one of the computing devices 18 and the second set of processing nodes 34 to be implemented on another of the computing devices 18.

In some implementations the rules-based application 32 may initially be implemented on a single computing device 18 and processing metrics may be captured over a period of time. During the period of time, hundreds, thousands or millions of transactions may be input into the rules-based application 32. The processing metrics may include any desired processing information, such as, by way of non-limiting example, an average processor and/or memory utilization of each of the processing nodes 34, an average throughput time for each of the processing nodes 34, the most common paths, or sequences, through the processing nodes 34, the source of external information, and the like. The processing metrics can be included in the processing node information 38 and provided to the constraint solver 40. The cost function may be based on one or more of the processing metrics, such as, by way of non-limiting example, an average processor and/or memory utilization of each of the processing nodes 34, an average throughput time for each of the processing nodes 34, the most common paths, or sequences, through the processing nodes 34, and the like. For example, the cost function may indicate a preference to maintain processing nodes 34 that are visited in sequence on a same computing device 18, or to maintain processing nodes 34 that have a same source of external information on a same computing device 18.

In some implementations processing nodes 34 may be classified as certain types of processing nodes. For example, processing nodes 34 that match attributes of an inserted fact object against constant values, or matches attributes of the inserted fact object against other attributes of the inserted fact object may be referred to as alpha processing nodes, and processing nodes 34 that match attributes of the inserted fact object against other previously inserted fact objects may be referred to as beta processing nodes. The cost function may indicate that beta processing nodes are to be implemented on a single computing device and alpha processing nodes may be distributed across multiple computing devices.

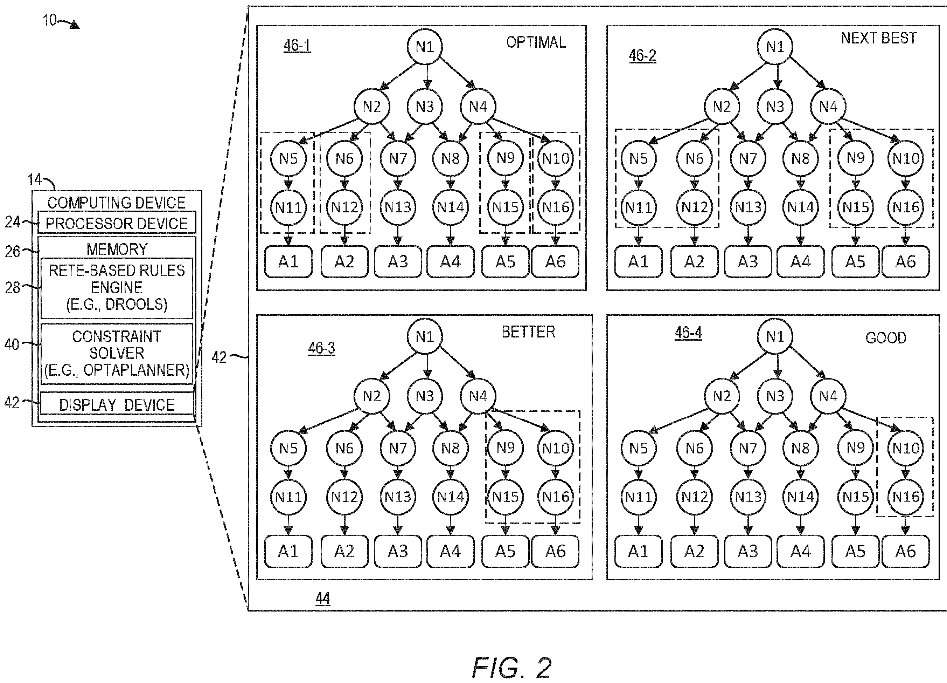

Figure 2 is a diagram illustrating a user interface presenting a plurality of solutions for automated distribution of the processing nodes 34 of the rules-based application 32 across the cluster of computing devices 18 according to one implementation. In this example, the cost function indicated, among other preferences, that only sequences of processing nodes 34 that do not include multiple inputs be distributable, and that the action processing nodes A1 - A6 not be distributable. In this example, based on the processing node information 38 and the cost function, the constraint solver 40 generated four solutions in descending order of meeting the cost function criteria. The rules engine 28 generates user interface imagery 44 that visually identifies the four solutions and presents the user interface imagery 44 on the display device 42.

The user interface imagery 44 includes a solution 46-1 that proposes a solution where processing nodes 34 that correspond to graph nodes N10 and N16 be implemented on a first computing device 18, that processing nodes 34 that correspond to graph nodes N9 and N15 be implemented on a second computing device 18, that processing nodes 34 that correspond to graph nodes N6 and N12 be implemented on a third computing device 18, that processing nodes 34 that correspond to graph nodes N5 and N11 be implemented on a fourth computing device 18, and that processing nodes 34 that correspond to graph nodes N1 - N4, N7, N8, N13, N14 and A1 - A6 be implemented on a fifth computing device 18.

The user interface imagery 44 includes a next best solution 46-2 where processing nodes 34 that correspond to graph nodes N9, N10, N15 and N16 be implemented on a first computing device 18, that processing nodes 34 that correspond to graph nodes N5, N6, N11 and N12 be implemented on a second computing device 18, and that processing nodes 34 that correspond to graph nodes N1 - N4, N7, N8, N13, N14 and A1 - A6 be implemented on a third computing device 18.

The user interface imagery 44 includes a next solution 46-3 where processing nodes 34 that correspond to graph nodes N9, N10, N15 and N16 be implemented on a first computing device 18, and that processing nodes 34 that correspond to graph nodes N1 - N8, N11 - N14 and A1 - A6 be implemented on a second computing device 18.

The user interface imagery 44 includes a final solution 46-4 where processing nodes 34 that correspond to graph nodes N10 and N16 be implemented on a first computing device 18, and that processing nodes 34 that correspond to graph nodes N1 - N9, N11 - N15 and A1 - A6 be implemented on a second computing device 18.

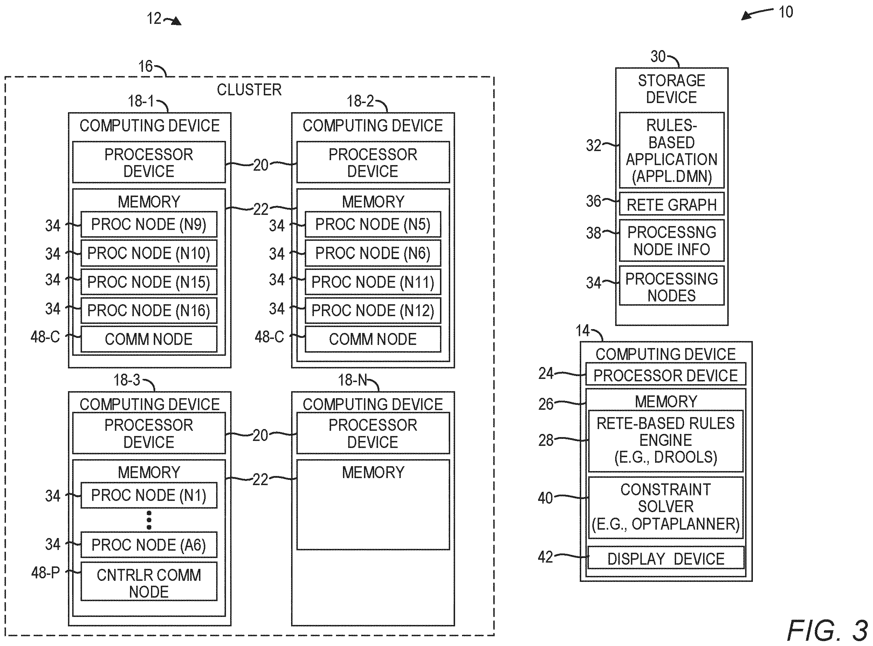

In this example, the operator selects the solution 46-2 via an input device, such as a mouse. Referring now to Figure 3, the rules engine 28 receives the selection of the solution 46-2, and causes the set of processing nodes 34 that correspond to the graph nodes N9, N10, N15 and N16 to be implemented on the computing device 18-1, the set of processing nodes 34 that correspond to the graph nodes N5, N6, N11 and N12 to be implemented on the computing device 18-2, and the processing nodes 34 that correspond to graph nodes N1 - N4, N7, N8, N13, N14 and A1 - A6 to be implemented on the computing device 18-3.

The processor nodes 34, when implemented on a computing device 18, are running instantiations of the executable code versions of the processor nodes 34 stored on the storage device 30. The processor nodes 34, when implemented on a computing device 18, may be any desired type of process, such as a serverless function, a container, or the like. In some implementations, one computing device 18 will also serve as the controller for the other computing devices 18. In this example, the computing device 18-3 on which the initial input processing node 34 that corresponds to the root graph node N1 serves as the controller computing device. The rules engine initiates a controller communication node 48-P on the computing device 18-3 and communication nodes 48-C on computing devices 18-1 and 18-3. The controller communication node 48-P and the communication nodes 48-C communicate information among one another. For example, the controller communication node 48-P may send a fact object to the communication node 48-C on the computing device 18-1 for processing by the processing nodes 34 that correspond to the graph nodes N9 and N10. The communication node 48-C provides the fact object to the processing node 34 that corresponds to the graph node N9. If the condition evaluated by the processing node 34 that corresponds to the graph node N9 is true, the processing node 34 that corresponds to the graph node N9 provides the fact object to the processing node 34 that corresponds to the graph node N10. If the condition evaluated by the processing node 34 that corresponds to the graph node N10 is also true, then the communication node 48-C sends a message to the controller communication node 48-P indicating the same.

It is noted that, because the rules engine 28 is a component of the computing device 14, functionality implemented by the rules engine 28 may be attributed to the computing device 14 generally. Moreover, in examples where the rules engine 28 comprises software instructions that program the processor device 24 to carry out functionality discussed herein, functionality implemented by the rules engine 28 may be attributed herein to the processor device 24.

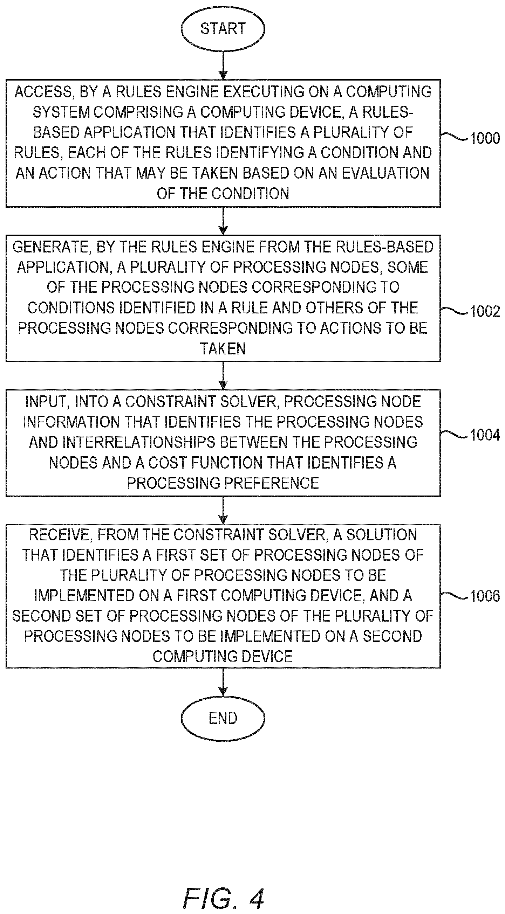

Figure 4 is a flowchart of a method for automated distribution of the processing nodes 34 of the rules-based application 32 across the cluster 16 of computing devices 18 according to some implementations. Figure 4 will be discussed in conjunction with Figure 1. The rules engine 28, executing on the computing system 12 comprising the computing device 14, accesses the rules-based application 32 that identifies the plurality of rules 33, each of the rules 33 identifying a condition and an action that may be taken based on an evaluation of the condition (Figure 4, block 1000). The rules engine 28 generates, from the rules-based application 32, the plurality of processing nodes 34, some of the processing nodes 34 corresponding to conditions identified in a rule 33 and others of the processing nodes 34 corresponding to actions to be taken (Figure 4, block 1002). The rules engine 28 inputs, into the constraint solver 40, the processing node information 38 that identifies the processing nodes 34 and interrelationships between the processing nodes 34 And a cost function that identifies a processing preference (Figure 4, block 1004). The rules engine 28 receives, from the constraint solver 40, a solution that identifies a first set of processing nodes 34 of the plurality of processing nodes 34 to be implemented on a first computing device 18, and a second set of processing nodes 34 of the plurality of processing nodes 34 to be implemented on a second computing device 18 (Figure 4, block 1006).

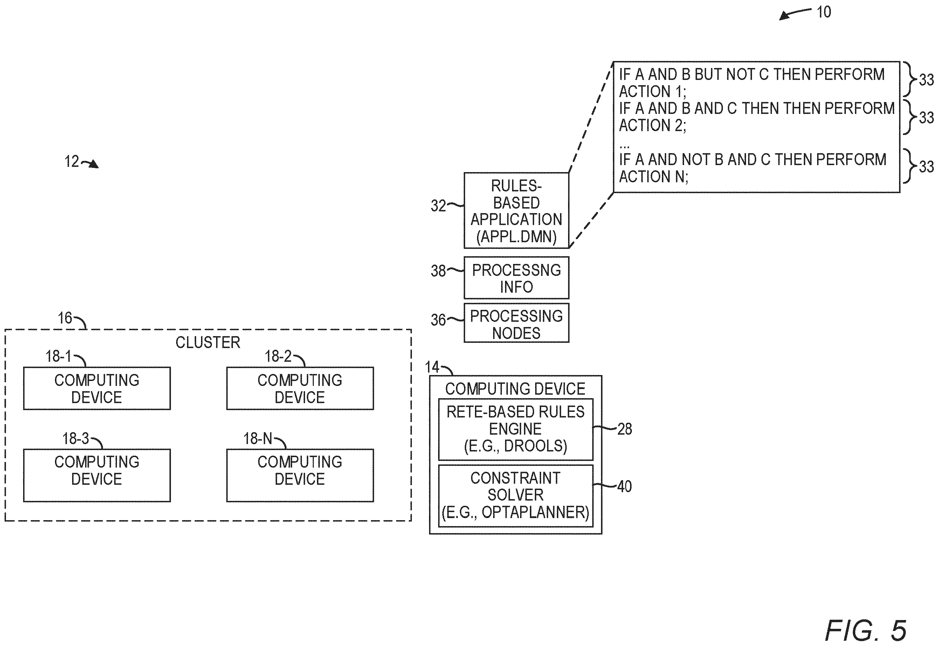

Figure 5 is a simplified block diagram of the environment 10 illustrated in Figure 1 according to one implementation. The environment 10 includes the computing system 12 comprising the one or more computing devices 14. The one or more computing devices 14 are to access the rules-based application 32 that identifies the plurality of rules 33, each of the rules 33 identifying a condition and an action that may be taken based on an evaluation of the condition. The one or more computing devices 14 are further to generate, from the rules-based application 32, the plurality of processing nodes 34, some of the processing nodes 34 corresponding to conditions identified in a rule 33 and others of the processing nodes 34 corresponding to actions to be taken. The one or more computing devices 14 are further to input, into the constraint solver 40, the processing node information 38 that identifies the processing nodes 34 and interrelationships between the processing nodes 34 and a cost function that identifies a processing preference. The one or more computing devices 14 are further to receive, from the constraint solver 40, a solution that identifies a first set of processing nodes 34 of the plurality of processing nodes 34 to be implemented on a first computing device 18, and a second set of processing nodes 34 of the plurality of processing nodes 34 to be implemented on a second computing device 18.

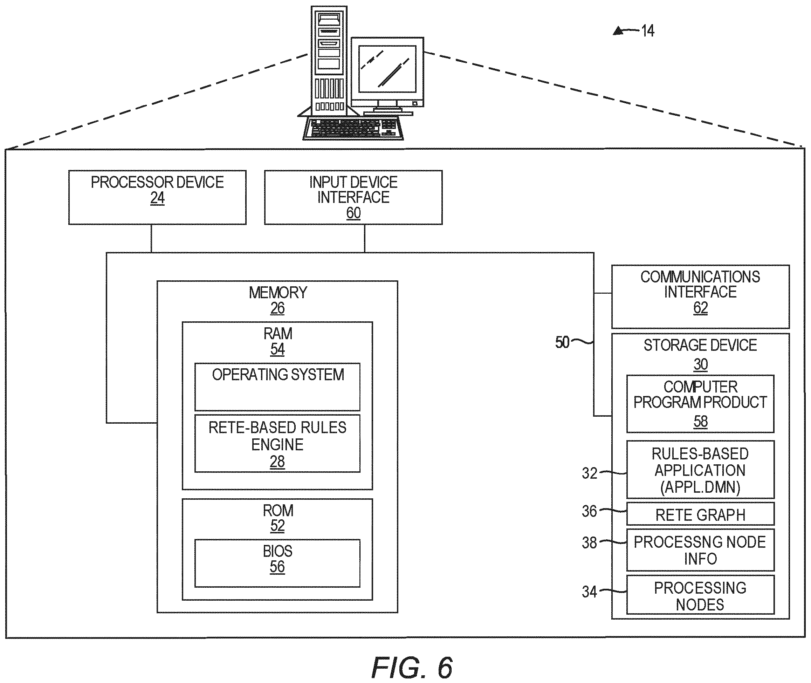

Figure 6 is a block diagram of the computing device 14 suitable for implementing examples according to one example. The computing device 14 may comprise any computing or electronic device capable of including firmware, hardware, and/or executing software instructions to implement the functionality described herein, such as a computer server, a desktop computing device, a laptop computing device, or the like. The computing device 14 includes the processor device 24, the system memory 26, and a system bus 50. The system bus 50 provides an interface for system components including, but not limited to, the system memory 26 and the processor device 24. The processor device 24 can be any commercially available or proprietary processor device.

The system bus 50 may be any of several types of bus structures that may further interconnect to a memory bus (with or without a memory controller), a peripheral bus, and/or a local bus using any of a variety of commercially available bus architectures. The system memory 26 may include non-volatile memory 52 (e.g., read-only memory (ROM), erasable programmable read-only memory (EPROM), electrically erasable programmable read-only memory (EEPROM), etc.), and volatile memory 54 (e.g., random-access memory (RAM)). A basic input/output system (BIOS) 56 may be stored in the non-volatile memory 52 and can include the basic routines that help to transfer information between elements within the computing device 14. The volatile memory 54 may also include a high-speed RAM, such as static RAM, for caching data.

The computing device 14 may further include or be coupled to a non-transitory computer-readable storage medium such as the storage device 30, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 30 and other drives associated with computer-readable media and computer-usable media may provide non-volatile storage of data, data structures, computer-executable instructions, and the like.

A number of modules can be stored in the storage device 30 and in the volatile memory 54, including an operating system and one or more program modules, such as the rules engine 28, which may implement the functionality described herein in whole or in part. All or a portion of the examples may be implemented as a computer program product 58 stored on a transitory or non-transitory computer-usable or computer-readable storage medium, such as the storage device 30, which includes complex programming instructions, such as complex computer-readable program code, to cause the processor device 24 to carry out the steps described herein. Thus, the computer-readable program code can comprise software instructions for implementing the functionality of the examples described herein when executed on the processor device 24. The processor device 24, in conjunction with the rules engine 28 in the volatile memory 54, may serve as a controller, or control system, for the computing device 14 that is to implement the functionality described herein.

An operator may also be able to enter one or more configuration commands through a keyboard (not illustrated), a pointing device such as a mouse (not illustrated), or a touch-sensitive surface such as a display device. Such input devices may be connected to the processor device 24 through an input device interface 60 that is coupled to the system bus 50 but can be connected by other interfaces such as a parallel port, an Institute of Electrical and Electronic Engineers (IEEE) 1394 serial port, a Universal Serial Bus (USB) port, an IR interface, and the like. The computing device 14 may also include a communications interface 62 suitable for communicating with a network as appropriate or desired.

Individuals will recognize improvements and modifications to the preferred examples of the disclosure. All such improvements and modifications are considered within the scope of the concepts disclosed herein and the claims that follow.

## Claims

1. A method, comprising:
accessing, by a rules engine executing on a computing system comprising a computing device, a rules-based application that identifies a plurality of rules, each of the rules identifying a condition and an action that may be taken based on an evaluation of the condition;
generating, by the rules engine from the rules-based application, a plurality of processing nodes, some of the processing nodes corresponding to conditions identified in a rule and others of the processing nodes corresponding to actions to be taken;
inputting, into a constraint solver, processing node information that identifies the processing nodes and interrelationships between the processing nodes and a cost function that identifies a processing preference; and
receiving, from the constraint solver, a solution that identifies a first set of processing nodes of the plurality of processing nodes to be implemented on a first computing device, and a second set of processing nodes of the plurality of processing nodes to be implemented on a second computing device.

2. The method of claim 1 wherein receiving the solution from the constraint solver comprises:
receiving, from the constraint solver, a plurality of solutions, each solution identifying a corresponding first set of processing nodes of the plurality of processing nodes to be implemented on the first computing device, and a corresponding second set of processing nodes of the plurality of processing nodes to be implemented on the second compute computing device, each solution being different.

3. The method of claim 2 further comprising:
presenting, by the computing system on a display device, user interface imagery that identifies the plurality of solutions;
receiving, by the computing system, a selection of a first solution of the plurality of solutions; and
causing the corresponding first set of processing nodes to be implemented on the first computing device and the second set of process nodes to be implemented on the second computing device.

4. The method of claim 1 wherein the processing nodes are implemented as serverless functions.

5. The method of claim 1 wherein the processing node information identifies paths of execution through the plurality of processing nodes for a plurality of previous transactions, and the cost function indicates a preference to maintain processing nodes that are visited in sequence on a same computing device.

6. The method of claim 1 wherein the processing node information identifies, for each of the processing nodes, a source of information for each of the processing nodes, and the cost function indicates a preference to maintain processing nodes that have a same source of external information on a same computing device.

7. The method of claim 1 wherein the rules engine is Rete-based.

8. The method of claim 1 wherein the plurality of processing nodes includes a first subset of alpha processing nodes and a second subset of beta processing nodes, each alpha processing node comprising a processing node that matches attributes of an inserted fact object against constant values, or matches attributes of the inserted fact object against other attributes of the inserted fact object, each beta processing node comprising a processing node that matches attributes of the inserted fact object against other previously inserted fact objects.

9. The method of claim 8 wherein the information that identifies the processing nodes and the interrelationships between the processing nodes identifies the first subset of processing nodes as alpha processing nodes and the second subset of processing nodes as beta processing nodes, and wherein the cost function indicates that the beta processing nodes are to be implemented on a single computing device and the alpha processing nodes may be distributed across multiple computing devices.

10. A computing system comprising:
one or more computing devices configured to carry out the method of any of the preceding claims.

11. A non-transitory computer-readable storage medium that includes executable instructions to cause a processor device to perform the method of any of claims 1 to 9.
